# EUROPEAN PATENT APPLICATION

(11) **EP 3 122 057 A1**
(43) Date of publication of application: **25.01.2017**
(21) Application number: 16180481.0
(22) Date of filing: 21.07.2016
(51) Int. Cl.: H04N 21/431, H04N 21/439, H04N 21/4722, G06F 3/16, H04N 21/472

(54) **USER INTERFACE FOR DISPLAYING VIDEO PLAY RELATIVE TO EPISODES IN A SERIES**

(30) Priority: 22.07.2015 US 201562195358 P
(71) Applicant: Thomson Licensing, 92130 Issy-les-Moulineaux (FR)
(72) Inventor: RETUREAU, Arnaud, 35576 Cesson-Sevigne (FR); NOGUEROL, Juan M, 35576 Cesson-Sevigne (FR); JOHNSON, Ananias, 35576 Cesson-Sevigne (FR)
(74) Representative: Huchet, Anne

(57) **Abstract**

A method of rendering an actively playing video image on a display of the device alongside still images of episodes related to the playing video includes receiving a request to arrange the still images of related episodes of the playing video image proximate to the playing video image that allows scrolling of the combination of playing video image and the related episode still images such that scrolling the playing video image on the display reduces the volume level of the audio component of the playing video image when the playing video image is scrolled partially out of viewing range on the display.

## Description

### FIELD

The present configuration relates to user interfaces, and in particular, is related to scheme for displaying active video alongside other episode depictions.

### BACKGROUND

In systems that present media selections to a user such as audio, video, games, books, movies, and the like, the presentation of a media selection often does not contain sufficient information for the user to make a quick assessment of the other media assets that are relevant to her viewing experience. Some media assets, such as television assets where there are multiple episodes in a series, may not be displayed such that a user can continue to view a selected video while determining if there are other available episodes for viewing. This information could be useful for not only making a different current selection, but also for taking action to download and saving a new media asset for future consumption while continuing to watch a currently playing video.

If alternate episodes are available for the currently playing video and if the episodes are arranged on a scrollable screen, then examining image data for many episodes may place the currently viewed video off-screen in which case the viewer misses the action of the video being actively played.

### SUMMARY

This summary is provided to introduce a selection of concepts in a simplified form as a prelude to the more detailed description that is presented later. The summary is not intended to identify key or essential features of the configuration, nor is it intended to delineate the scope of the claimed subject matter.

In one aspect of the disclosure, method of generating a display on a device includes, in response to a request to display episodes related to a playing video image, displaying the playing video image alongside static images of the related episodes of the playing video image, wherein the playing video image remains actively playing on a display of the device as the static images of the related episodes are rendered on the display alongside the playing video image. Reducing a volume level of an audio component of the playing video image when the playing video image is scrolled partially out of viewing range on the display is performed.

In another aspect of the method, reducing a volume level of the audio component of the playing video image when the video image is scrolled out of viewing range on the display includes reducing the volume level of the audio component of the playing video image by a fixed amount when the video image is scrolled partially out of viewing range on the display. In one embodiment, the fixed amount is 50%.

In another aspect of the method, reducing a volume level of the audio component of the playing video image when the video image is scrolled out of viewing range on the display includes reducing the volume level of the audio component of the playing video image by an amount proportional to the amount of the playing video image displayed when the playing video image is scrolled partially out of viewing range on the display.

In another aspect of the method, it further includes causing the playing video image to become a paused video image when the video image is scrolled completely out of viewing range on the display. In a further embodiment, the method includes causing the paused video image to return to a playing video image when the paused video image is moved back into view on the display.

In one embodiment of the method, displaying an actively playing video image on the device includes displaying a streaming video image or displaying an actively playing video image on the device includes displaying a broadcast video image.

In another aspect of the method, displaying the active video alongside the related episodes of the playing video image includes displaying a video image from a first source and displaying related episode images from a second source. In one embodiment, a source of the related episodes is displayed proximate to the static images of the related episodes.

In one aspect of the disclosure, a mobile device for generating a combined display of a playing video and still images of episodes related to the playing video includes a network interface to receive information for the playing video and the still images, a display displaying the playing video, and a controller, connected to memory, for receiving a request to render the still images related to the playing video. In response to the request, the controller causes the display to render the still images in an arrangement proximate to the playing video, the arrangement allowing a scrolling of the playing video and the still images. The controller responds to a scrolling of the playing video and causes a reduction of volume level of an audio component of the playing video when the playing video is scrolled partially out of viewing range on the display.

In one aspect, the mobile device controller causes a reduction of the volume level of the audio component of the playing video by a fixed amount when the playing video is scrolled partially out of viewing range on the display. In another embodiment, the controller causes a reduction of the volume level of the audio component of the playing video by an amount proportional to the amount of the playing video displayed when the playing video is scrolled partially out of viewing range on the display.

In another aspect, the mobile device controller causes the playing video to become a paused video when the playing video is scrolled completely out of viewing range on the display. In another aspect, the mobile device controller causes the paused video to return to a playing video when the paused video is moved back into view on the display.

Additional features and advantages of the configuration will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

### BRIEF DESCRIPTION OF THE DRAWINGS

The foregoing summary of the configuration, as well as the following detailed description of illustrative embodiments, is better understood when read in conjunction with the accompanying drawings, which are included by way of example, and not by way of limitation with regard to the appended claims. In the drawings, like numbers represent similar elements.
Figure 1 illustrates an example system block diagram and environment in which the current configuration may reside;
Figure 2 illustrates a user interface example display embodiment corresponding to the current configuration;
Figure 3 illustrates an example component block diagram embodiment having aspects of the current configuration;
Figure 4 depicts an example flow diagram of the current configuration; and
Figure 5 illustrates an example media device block diagram containing aspects of the current configuration.

### DETAILED DISCUSSION OF THE EMBODIMENTS

In the following description of various illustrative embodiments, reference is made to the accompanying drawings, which form a part thereof, and in which is shown, by way of illustration, how various embodiments in the configuration may be practiced. It is to be understood that other embodiments may be utilized and structural and functional modification may be made without departing from the scope of the present configuration.

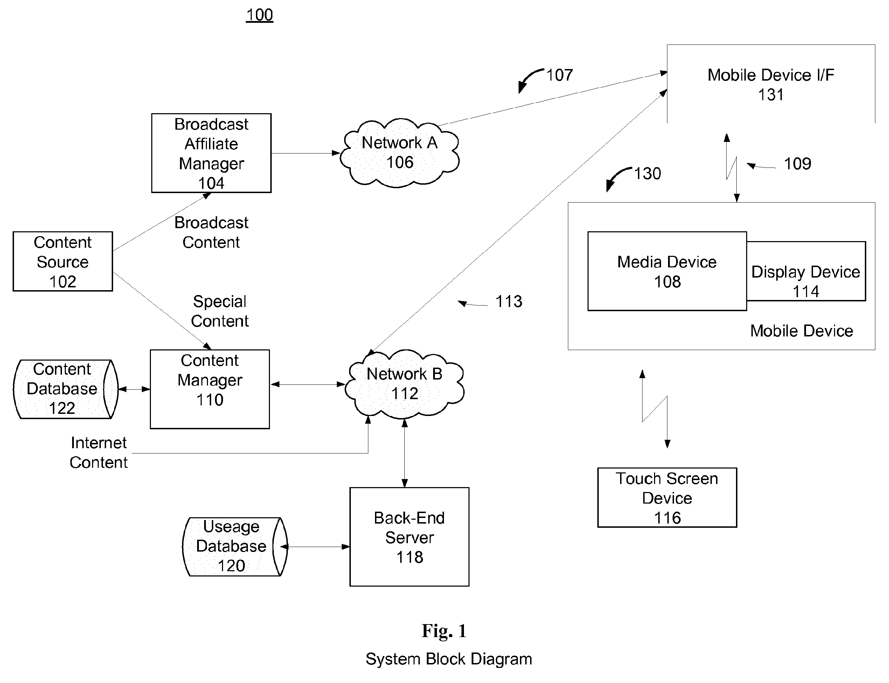

Figure 1 is a block diagram of an embodiment of a system 100 for delivering content to a home or end user. The content originates from a content source 102, such as a movie studio or production house. The content can be supplied in at least one of two forms. One form can be a broadcast form of content. The broadcast content is provided to the broadcast affiliate manager 104, which is typically a national broadcast service, such as the American Broadcasting Company (ABC), National Broadcasting Company (NBC), Columbia Broadcasting System (CBS), etc. The broadcast affiliate manager can collect and store the content, and can schedule delivery of the content over a delivery network, shown as delivery network A (106). Delivery network A (106) can include satellite link transmission from a national center to one or more regional or local centers. Delivery network A (106) can also include local content delivery using local delivery systems such as over the air broadcast, satellite broadcast, or cable broadcast. The locally delivered content is provided to a media device 108 in a user's home, where the content will subsequently be searched by the user. It is to be appreciated that the media device 108 can take many forms and can be embodied as a set top box, digital video recorder (DVR), a gateway, a modem, or any combination thereof etc. Further, the media device 108 can act as entry point, or gateway, for a home network system that includes additional devices configured as either client or peer devices in the home network.

A second form of content from content source 102 may be referred to as special content. Special content can include content delivered as premium viewing, pay-per-view, or other content otherwise not provided to the broadcast affiliate manager 104, e.g., movies, video games or other video elements. In many cases, the special content can be content requested by the user. The special content can be delivered to a content manager 110 that can include cable TV digital content. The content manager 110 can be a service provider, such as an Internet website, affiliated, for instance, with a content provider, broadcast service, or delivery network service. The content manager 110 can also incorporate Internet content into the delivery system. The content manager 110 can deliver the content to the user's media device 108 over a separate delivery network, delivery network B (112). Delivery network B (112) can include high-speed broadband Internet type communications systems. It is important to note that the content from the broadcast affiliate manager 104 can also be delivered using all or parts of delivery network B (112) and content from the content manager 110 can be delivered using all or parts of delivery network A (106) (interconnections not shown in Figure 1). In addition, the user can also obtain content directly from the Internet via delivery network B (112) without necessarily having the content managed by the content manager 110. The content manager has access to a content database 122 which serves as a repository, if not simply an access point, for content available for viewing by media device 108.

A mobile device 130, containing a media player (media device 108) and the display device 114 may be implemented as a laptop, a cellular phone, a PDA, a tablet, an e-reader, and the like. Mobile device 130 interfaces with the mobile device interface 131. The interface 131 is shown for completeness as mobile device 130 is likely wireless and can be communicated with using a variety of interfaces based on the nature of the mobile device. For example, if mobile device 130 is a laptop device, then the connection from network A 106 or network B 112 to the mobile device interface 131 may be Internet coupled such that the mobile interface 131 includes a modem, wireless router. Such functionality may be found in a home or public gateway. Thus, the link 109 can be an RF link such as that of IEEE 802.11. In another implementation, mobile device 130 could be a cellular mobile device, such as a cell phone. In this instance, the mobile device interface 131 can be a suitable portion of a cellular network. Interface 109 between the mobile device 130 and the mobile device interface 131 may be an RF or other type of interface but the format could be proprietary to the cellular service provider. In another embodiment, mobile device 130 need not be mobile. Instead device 130 can be a media device that can have a fixed location, such as a set-top-box, or function in a television receiver. As such, item 130 may be configured simply as container for a media device 108 and the display device 114.

Returning to the content source 102 of Figure 1, several adaptations for utilizing the separately delivered content can be possible. In one possible approach, the special content is provided as an augmentation to the broadcast content, providing alternative displays, purchase and merchandising options, enhancement material, etc. In another embodiment, the special content can completely replace some programming content provided as broadcast content. Finally, the special content can be completely separate from the broadcast content, and can simply be a media alternative that the user can choose to utilize. For instance, the special content can be a library of movies that are not yet available as broadcast content.

The media device 108, part of mobile device 130 can receive different types of content from one or both of delivery network A and delivery network B. The media device 108 processes the content, and provides such content based on user preferences and commands. The media device 108 can also include a storage device, such as a hard drive or optical disk drive, for recording and playing back audio and video content. The processed content is provided to a display device 114. The display device 114 can be a conventional 2-D type display. Integrated or separate, or can alternatively be an advanced 3-D display depending on the nature of the mobile device 130. The display device can be a full television device, a monitor, or a display built in and associated with the mobile device 130 that contains the media device 108.

The media device 108 can also be interfaced to a second screen such as a touch screen control device 116. The touch screen control device 116 can be adapted to provide user control for the media device 108 and/or the display device 114. The touch screen device 116 can also be capable of displaying video and audio content. An example touch screen device can be a remote control, a digital tablet, a cell phone, a personal digital assistant, a personal computer, and the like. The video content displayed on the touch screen device 116 can be a representation of graphics or text entries, such as user interface entries (as discussed below), or can be all or a portion of the video and audio content that is delivered to the display device 114. The touch screen control device 116 can interface to media device 108 using any well-known signal transmission system, such as infra-red (IR) or radio frequency (RF) communications and can include standard protocols such as infra-red data association (IRDA) standard, Wi-Fi, Bluetooth and the like, or any other proprietary protocols.

In the example of Figure 1, system 100 also includes a back end server 118 and a usage database 120. The back end server 118 includes a personalization engine that analyzes the usage habits of a user and makes recommendations based on those usage habits. The usage database 120 is where the usage habits for a user are stored. In some cases, the usage database 120 can be part of the back end server 118. In the present example, the back end server 118 (as well as the usage database 120) is connected to the system 100 and accessed through the delivery network B (112). In an alternate embodiment, the usage database 120 and backend server 118 can be embodied in the media device 108. In a further alternate embodiment, the usage database 120 and back end server 118 can be embodied on a local area network to which the media device 108 is connected. Backend server 118 and its access to Internet content allow the location and display of related episodes as part of the current configuration.

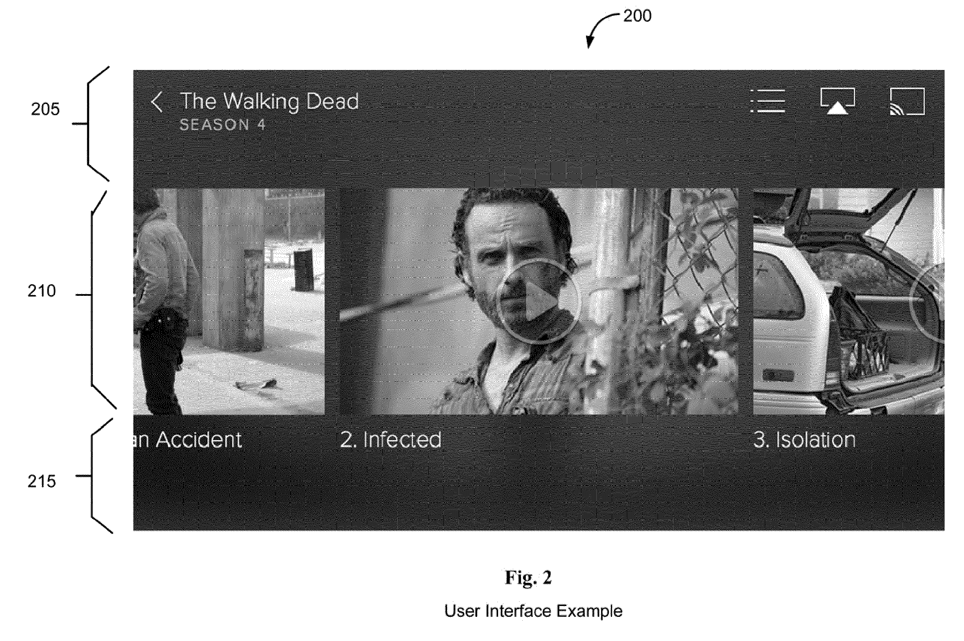

Figure 2 illustrates an example display on a device, such as mobile device 130. The depiction of Figure 2 shows an actively playing video episode, labeled "infected" side-by-side with a still image representation of a previous episode partially entitled "accident" and a still image representation of a subsequent episode entitled "isolation". Still image representations may also be known as thumbnail images. As an aspect of the configuration, an actively playing video (e.g. isolation) is displayed proximate (alongside, nearby, side-by-side) still images of previous and subsequent episodes on a display screen of a mobile device. The display is scrollable. In the example of Figure 2, the screen is scrollable in the horizontal axis; otherwise known as the left to right direction. One of skill in the art will recognize that the mobile device may also be oriented into the portrait mode and may then be scrollable in the vertical axis or the up and down direction. One benefit for the user resulting from the current configuration is convenient access to episodes in one centralized location while viewing an actively playing video. Another advantage to be described below is a volume level notification of when the actively playing video begins to become scrolled off screen.

Area 205 of the example display of Figure 2 is an indication of the name of the series and season. However, other information may be presented such as the source of the media assets being shown. In one embodiment, the source of the actively playing video can be MGo™ while the source of the previous episode could be YouTube™, while the source of a subsequent episode could be Hulu™. Although the source example described above indicate all different sources, one or more sources for all episodes and the actively playing video could be indicated in a display. Thus, there is an advantage of ease of browsing for the user because the browsing is more focused on the related episode and the season itself instead of the source of the related episodes. Otherwise, the user would have to browse different source sites to get information on related episodes from different sources.

Area 210 of the mobile device display contains the windows showing the actively played video (i.e. infected), and the still image related episode windows. The windows can be arranged in a chronological order where a previous episode still image is to the left of an actively playing video and a subsequent episode still image is to the right of the actively playing video. The actively playing video and the related episode still images are scrollable left to right and the reverse.

Area 215 of the mobile device display includes information about the window being displayed. For example, episode information may contain information such as the season, episode number, title of the episode, production date, and the like. The actively played video may have similar information as well as the length of the video in time and the duration left of play. Such play information may also be express as a progress bar or a percentage of play, remaining minutes, and the like.

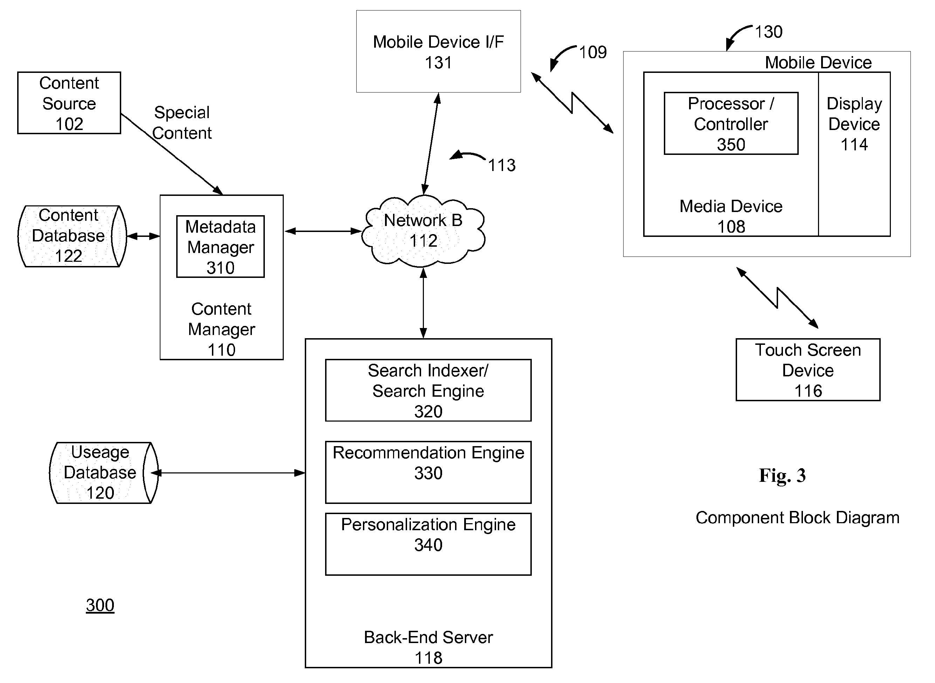

Turning now to Figure 3, a closer look at the component elements 300 of the lower half of Figure 1 is provided. Here, the example distribution network B (112) is depicted along with interconnected functional components. As in Figure 1, a content source 102 delivers special content, such as movies, film clips, videos, such as episodes in a series, games, and the like to a content manager 110. Such special content may be made available to the content manager 110 via a content database 122. Content requested by the mobile device 130 and can be delivered to the media device 108 via network B (112).

The content source 102 can provide information about the content from the content owners. For example, if the media article provided by the content owner is a movie, a synopsis of the movie is provided. This synopsis information forms a part of data associated with the media article and is part of the metadata concerning the media article. This and other metadata are received by the content source 102 and are processed by the metadata manager 310 residing in the content manager 110. The metadata manager analyzes the metadata concerning the media asset (otherwise known as a media item or media article), such as a movie, video, audio file, book, or other digital asset and associates the metadata with the media article. The metadata may contain a title, production date, authors, actors, production studio, genre, description, search keywords, and the like. The metadata manager 310 captures the metadata, sorts it, and associates the metadata with the media article that is made available via the content database 122. The content database contains the media article and may also contain the related metadata. The content database is loaded/maintained/updated via a communication from the content owners via the content source 102. Metadata also includes, for example, the time at which new episodes of a media asset are available for consumption.

A search indexer and search engine 320 is part of the back-end server 118. The search indexer uses the metadata from the metadata manager 310 and provides a searchable organization of the metadata. Such an organization of metadata can be called indexing. The metadata indexing is useful by a search engine 320 to implement searches based on metadata. Thus, if keywords are one form of metadata that are organized by the metadata manager 320, then the search engine 320 can access a reference to the digital content that contains the respective keywords. As such, the search indexer and search engine work closely with each other. One of skill in the art will appreciated that these two items can be collocated into a single structure or can be separate structures that are closely bound. Each can have its own processor, memory, software instructions and input/output structure, or both functions can share the same resources.

The recommendation engine 330 of Figure 3 is used in conjunction with the personalization engine 340 to provide recommendations in response to a user query based on information about the user in the usage database 120. The usage database 120 contains information about the user's habits, preferences, and viewings of media assets.

In one scenario, a media device can request an update for one or more items from the back end server 118. These request items can include a request for recommendations, a specific video, such as a video in an episodic series, a request for media asset metadata such as thumbnail, title, and related episode season and episode designations. The related episode information can also be sent to a media device 108 within the mobile device 130 from a back end server 118 as a result of a request for new subscription information or viewing preferences of a viewer. This information may be held or acquired via the personalization engine 340. In addition, as a result of regular polling for new episode information, the personalization engine 340, the recommendation engine 330, and the search engine 320 can work together to search for related episode information. If related episode information is found, even absent a specific request form the media device 108, then the discovered related episode information can be pushed to the media device for display to the user of the mobile device. Other metadata that can be pushed to the mobile device is the source of the related episodes.

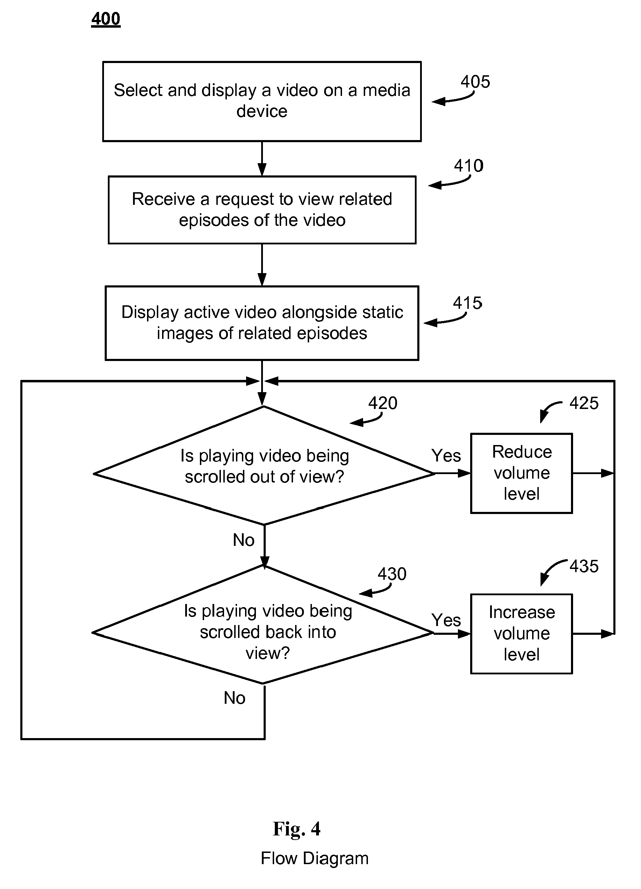

Figure 4 depicts a flow diagram 400 according to aspects of the configuration. At step 405, the media device 108 of the mobile device 130 is configured to allow a user to select and view a video on the mobile device 130. As earlier indicated, mobile device 130 can be a mobile phone, a tablet, a PDA, an e-reader, and the like. At step 410, the mobile device 130 receives a request to display a combination of active video and other related episode information. At the beginning of playing a video trailer or anytime while playing the media asset video, a selection may be made to display a set of episodes related to the video being watched. The selection to view both the actively playing video and the related episodes may be made by selecting a soft button, an external button on the mobile device 130, a swipe action, or by voice command.

At step 415, in response to the request to see episode information, the mobile device displays the actively playing video as well as static images of related episodes of the actively playing video. An example of such an image is shown in Figure 2. In such a display, the actively playing video is displayed alongside the static images of related episodes. In one embodiment, the images, both static and actively playing video, are arranged in chronological order where earlier produced episodes precede those later produces and where the actively playing video is inserted into the timeline of episodes at a position appropriate with its production release date.

In one aspect of the configuration, the display of images of the actively playing video along with the static images of related episodes are arranged left to right and the images may be moved left or right based on user inputs. Such inputs control scrolling of the items shown on the screen. In the instance where images are arranged in an order from left to right, then scrolling the images can occur in either in a rightmost direction or a leftmost direction. The user inputs can include soft key (button) manipulation to select a left or right scrolling function, hard key (button) scrolling controls, touch screen swiping, using a remote control unit, and the like. One of skill in the art will recognize that the display can also be arranged in a top to bottom organization as easily as a left to right organization. In some embodiments, where the mobile device has a portrait versus landscape display control, the display can change from left to right (landscape display mode) to a top to bottom (portrait display mode) automatically based on the orientation of the screen with respect to the user or via direct user selection of landscape or portrait mode. In either display orientation mode, it is expected that the display can be scrolled to more fully view the static images of the related episodes.

However, as one scrolls, the active video can be scrolled off screen. This has the disadvantage of not allowing the user to view the full content of the actively playing video. To correct this problem, the current configuration provides an alert to the user when the active video is no longer fully in view. In one aspect of the configuration, the audio of the video being played is reduced by a fixed amount when the active video is no longer in full view. In another embodiment, the audio volume of the actively played video is proportionally reduced based on the amount of video displayed on the display. For example, if 60% of the video is off screen, the audio volume reduction is 60%. The reduction of audio of the playing video when being scrolled off-screen has the advantage of notifying the user that he may not be able to view the entire video image.

Returning to Figure 4, step 415 displays both the active video and the still images of related episodes. At step 420, it is determined whether the video is being scrolled out of view. If the actively played video is being scrolled such that the video is no longer being fully displayed on the scrolling image, then decision block 420 transitions to step 425 where the volume is reduced. The reduction in volume can be either a discrete step such as a one-time fixed level reduction, or in a preferred embodiment, proportionally reduced based on the amount of video being displayed on the mobile device display. At step 425 the process 400 returns to step 420.

At step 420 any further scrolling out of view of the actively playing video will be met with proportional reductions in audio volume as the process loops around steps 420 and 425. If the video is being actively displayed is not being scrolled out of view then the process 400 enters decision point 430. If at step 430, the playing video is scrolled back into view, then step 435 is entered where the volume of the actively played video is increased in volume from its previously reduced level. This increase can be either a one-time fixed level increase, or in a preferred embodiment, proportionally increased based on the amount of video being displayed on the mobile device display. After either the one-time increase or the proportional increase, the process 400 moves back to step 420 where further scrolling is detected.

Assuming that the actively playing video is not being scrolled, then the process 400 loops through steps 420 and 430 until a scrolling condition is detected with respect to the actively playing video. Options not specifically shown in the flow diagram of Figure 4 include pausing the actively playing video when the actively playing video is scrolled a certain percentage or proportion out of view of the display screen. For example, the actively playing video may be caused to pause when only 50% or 30% or 10% or 0% of the video is being displayed on the mobile device display screen. Likewise, when the video is returned to visibility on the display screen of the mobile device, the paused video may be released from the pause mode or returned to an actively playing state. This return to an actively playing condition of the paused video may occur when the scrolling of the display screen reaches a particular visible proportion of the visible screen. For example, the paused video may be returned to an actively playing when 10% or 30% or 50% or 100% of the window of the paused video is visible on the display screen of the mobile device.

It can be appreciated that in the above embodiments where the video becomes paused by being scrolled off of the display screen by some amount, then the respective audio is also paused regardless of the set the volume. In one embodiment, when the video resumes play, the volume is set proportionally to the amount of playing video displayed on the mobile device. Thus, if the video is paused when 70% of the video is off screen (30% video remaining on screen), and the video is slowly scrolled back onto the screen, the volume will be restored to 30% of its full volume because, initially, when the video window is scrolled back onto the screen, only 30% of the actively playing video is displayed.

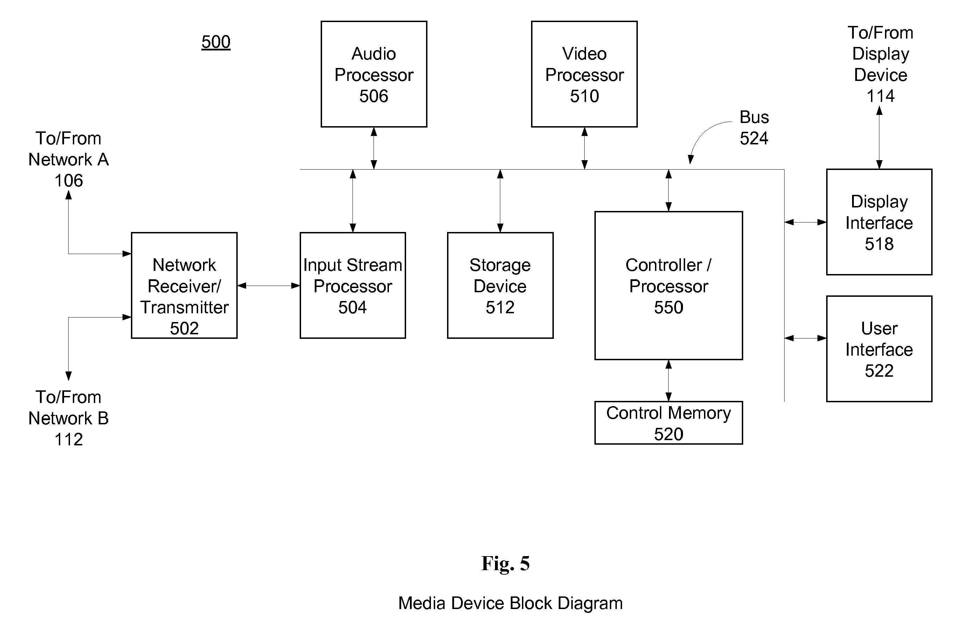

Turning now to FIG. 5, a block diagram of an embodiment of a media device 500 is shown. Media device (also known as a receiving device) 500 is part of the mobile device 130 and can operate similar to the mobile device containing the media device 108 described in Figure 1. Several components necessary for complete operation of the system are not shown in the interest of conciseness, as they are well known to those skilled in the art. For example, if the mobile device is a laptop, then the network receiver/transmitter 502 of Figure 5 can be an IEEE 802.11 compatible interface or the like. If the mobile device 130 is a cellular device, then the network receiver/transmitter 502 would be compatible with the RF formats and restrictions of the cellular provider.

Generally, the network receiver/transmitter 502 can be one of several known receiver circuits used for receiving, demodulation, and decoding signals provided over one of the several possible networks including over the air (wireless), satellite, cable, Ethernet, fiber, and terrestrial cellular networks. The desired input signal can be selected and retrieved by the network receiver/transmitter 502 based on user input provided through a control interface, such as a user interface 522 of the mobile device 130. User interface 522 can be a touch screen interface 522 can also be adapted to interface to a cellular phone, a tablet, a mouse, a high end remote or the like. In one set of interface embodiments, the user interface 522 itself can be a wired or wireless interface.

The network interface 502 receives signals necessary to display a video expected to be displayed by the media device of the mobile device. Thus, receiver/transmitter 502 and input stream processor 504 allows for video data transfer for the purposes of either streaming or downloading such that the mobile device can display an actively displayed video. Network interface 502 also allows for transactions over a network resulting in the reception of information concerning related episodes of the actively playing video.

In one embodiment, one or more digital busses 524 interconnect the controller processor 550 with other functional blocks. One of skill in the art recognizes that non-bus-oriented topologies are also possible implementations of the media device 500. Blocks that have a bus 524 interface with the processor 550 include input stream processor 504, storage device 512, audio processor 506, video processor 510, display interface 518, and touch panel interface 522.

The decoded output signal of network receiver/transmitter 502 is provided to an input stream processor 504. The input stream processor 504 performs the final signal selection and processing, and includes separation of video content from audio content for the content stream of either network input 106 or 112. The audio content is provided to an audio processor 506 for conversion from the received format, such as compressed digital signal, to an analog waveform signal or equivalent digital audio for use by an output device, such as a display 114 or a touch screen device 116. In one embodiment, a digital audio signal from audio processor 506 can be used to drive a display device using a High-Definition Multimedia Interface (HDMI) cable or alternate audio interface such as via a Sony/Philips Digital Interconnect Format (SPDIF) (not shown). One version of audio interface can also include amplifiers for driving one more sets of speakers. The audio processor 506 also performs any necessary conversion for the storage of the audio signals.

The video output from the input stream processor 504 is provided to a video processor 510 via a bus 524. The video signal can be one of several formats. The video processor 510 provides, as necessary, a conversion of the video content, based on the input signal format. The video processor 510 also performs any necessary conversion for the storage of the video signals. In one embodiment, the video processor 510 may be part of or closely coupled with controller processor 550 and the combination is responsible for formatting new episode information prior to display of the new episode information.

A storage device 512 stores audio and video content received at the input. The storage device 512 allows later retrieval and playback of the content under the control of a controller 550 and also based on commands, e.g., navigation instructions such as fast-forward (FF) and rewind (RW), received from a user interface (not shown) and/or touch panel interface 522. The storage device 512 can be a hard disk drive, one or more large capacity integrated electronic memories, such as static RAM (SRAM), or dynamic RAM (DRAM), or can be an interchangeable optical disk storage system such as a compact disk (CD) drive or digital video disk (DVD) drive.

The converted video signal, from the video processor 510, either originating from the input or from the storage device 512, is provided to the display interface 518. The display interface 518 further provides the display signal to a display device of the type described above. The display interface 518 can be an analog signal interface such as red-green-blue (RGB) or can be a digital interface such as HDMI.

In one embodiment, the controller 550 hosts the display formatter for the user interface. The controller/processor 550 also manages the conversion process for converting the input stream signal into a signal for storage on the storage device or for display. The controller 550 also manages the retrieval and playback of stored content. The controller/processor 550 also controls the user interface 522 to detect a request by a user to display both an actively displayed video alongside still images of related episodes. The controller/processor 550 detects the scrolling of the display so as to detect when the actively displayed video is being scrolled off-screen so as to control the audio processor 506 and the video processor 510. The controller/processor 550 also acts with the audio processor 506 to change the volume of audio of the actively played video and the video processor 510 to pause or restart the actively played video according to the functionality of the method of Figure 4.

The controller 550 is further coupled to control memory 520 (e.g., volatile or nonvolatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller 550. Control memory 520 can store instructions for controller 550. Further, the implementation of the control memory 520 can include several possible embodiments, such as a single memory device or, alternatively, more than one memory circuit communicatively connected or coupled together to form a shared or common memory. Still further, the memory can be included with other circuitry, such as portions of bus communications circuitry, in a larger circuit.

Optionally, controller 550 can be adapted to extract metadata, criteria, characteristics or the like from audio and video media by using audio processor 506 and video processor 510, respectively. That is, metadata, criteria, auxiliary data fields associated with video, or in other areas in the video signal can be harvested by using the video processor 510 with controller 550 to generate metadata that can be used for functions such as generating an electronic program guide having descriptive information about received video, supporting an auxiliary information service, and the like. Similarly, the audio processor 506 working with controller 550 can be adapted to recognize audio watermarks that can be in an audio signal. Such audio watermarks can then be used to perform some action such as the recognition of the audio signal, provide security which identifies the source of an audio signal, or perform some other service. Furthermore, metadata, criteria, characteristics or the like, to support the actions listed above can come from a network source which are processed by controller 550.

As part of the current configuration, the controller/processor executes instructions compatible with the method 400 of Figure 4. Although one implementation of the mobile device 130 and its media device 108 are shown in Figure 5, one of skill in the art will recognize that functionality may be combined or separated to provide the hardware that supports the software instructions necessary to implement the display and playback characteristics of the current configuration.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art.

## Claims

1. A method of generating a display on a device, the method comprising:
in response to a request (410) to display episodes related to a playing video image, displaying the playing video image alongside static images of the related episodes of the playing video image (415), wherein the playing video image remains actively playing on a display of the device as the static images of the related episodes are rendered on the display alongside the playing video image;
reducing a volume level (425) of an audio component of the playing video image when the playing video image is scrolled partially out of viewing range on the display.

2. The method of claim 1, wherein reducing a volume level of the audio component of the playing video image when the video image is scrolled out of viewing range on the display comprises reducing the volume level of the audio component of the playing video image by a fixed amount when the video image is scrolled partially out of viewing range on the display.

3. The method of claim 2, wherein the fixed amount is 50%.

4. The method of claim 1, wherein reducing a volume level of the audio component of the playing video image when the video image is scrolled out of viewing range on the display comprises reducing the volume level of the audio component of the playing video image by an amount proportional to the amount of the playing video image displayed when the playing video image is scrolled partially out of viewing range on the display.

5. The method of claim 1, further comprising causing the playing video image to become a paused video image when the video image is scrolled completely out of viewing range on the display.

6. The method a claim 5, further comprising causing the paused video image to return to a playing video image when the paused video image is moved back into view on the display.

7. The method of claim 1, wherein displaying an actively playing video image on the device comprises displaying a streaming video image.

8. The method of claim 1, wherein displaying an actively playing video image on the device comprises displaying a broadcast video image.

9. The method of claim 1, wherein displaying the active video alongside the related episodes of the playing video image comprises displaying a video image from a first source and displaying related episode images from a second source.

10. The method of claim 9, wherein a source of the related episodes is displayed proximate to the static images of the related episodes.

11. A mobile device for generating a combined display of a playing video and still images of episodes related to the playing video, the mobile device comprising:
a network interface (502) to receive information for the playing video and the still images;
a display (114) displaying the playing video;
a controller (550), connected to memory, for receiving a request to render the still images related to the playing video, wherein in response to the request, the controller causes the display to render the still images in an arrangement proximate to the playing video, the arrangement allowing a scrolling of the playing video and the still images;
wherein the controller responds to a scrolling of the playing video and causes a reduction of volume level of an audio component of the playing video when the playing video is scrolled partially out of viewing range on the display.

12. The mobile device of claim 11, wherein the controller causes a reduction of the volume level of the audio component of the playing video by a fixed amount when the playing video is scrolled partially out of viewing range on the display.

13. The mobile device of claim 15, wherein the controller causes a reduction of the volume level of the audio component of the playing video by an amount proportional to the amount of the playing video displayed when the playing video is scrolled partially out of viewing range on the display.

14. The mobile device of claim 15, wherein the controller causes the playing video to become a paused video when the playing video is scrolled completely out of viewing range on the display.

15. The mobile device of claim 19, wherein the controller causes the paused video to return to a playing video when the paused video is moved back into view on the display.
